# EUROPEAN PATENT APPLICATION

(11) **EP 4 582 938 A1**
(43) Date of publication of application: **09.07.2025**
(21) Application number: 24220827.0
(22) Date of filing: 17.12.2024
(51) Int. Cl.: G06F 9/445

(54) **CONFIGURATION INFORMATION CHANGES**

(30) Priority: 04.01.2024 US 202463617554 P; 07.10.2024 US 202418907724
(71) Applicant: BlackBerry Limited, Waterloo, Ontario N2K 0A7 (CA)
(72) Inventor: BLAIS, Pierre Pierre, Waterloo, ON, N2K 0A7 (CA); YERXA, Barry Fraser, Waterloo, ON, N2K 0A7 (CA)
(74) Representative: MERH-IP Matias Erny Reichl Hoffmann Patentanwälte PartG mbB

(57) **Abstract**

In some examples, a system reads a first configuration file comprising a first configuration parameter that affects an execution of a process in a vehicle, and determines whether any update configuration file is present by checking for a storage location having an identifier based on a property of the first configuration file, the update configuration file comprising an entry specifying a change for the first configuration file. The system applies the update configuration file to the first configuration file to determine configuration parameters to apply for the process when executed in the vehicle.

## Description

### Cross-Reference to Related Application

This application claims the benefit under 35 U.S.C. § 119(e) of U.S. Provisional Patent Application No. 63/617,554, filed January 4, 2024 (Attorney Docket 51172-US-PRV), which is hereby incorporated by reference in its entirety.

### Background

A vehicle can include various electronic components that are able to perform respective tasks. Processes can run in the electronic components based on execution of machine-readable instructions.

### Brief Description of the Drawings

Some implementations of the present disclosure are described with respect to the following figures.
FIG. 1 is a block diagram of an arrangement that includes a vehicle according to some examples of the present disclosure.
FIG. 2 is a flow diagram of processing of configuration files, according to some examples.
FIG. 3 is a block diagram of a system according to some examples.

Throughout the drawings, identical reference numbers designate similar, but not necessarily identical, elements. The figures are not necessarily to scale, and the size of some parts may be exaggerated to more clearly illustrate the example shown. Moreover, the drawings provide examples and/or implementations consistent with the description; however, the description is not limited to the examples and/or implementations provided in the drawings.

### Detailed Description

The execution of a process in a vehicle can be controlled based on configuration information. "Controlling" the execution of a process can refer to any or some combination of the following: controlling usage of a resource of the vehicle by the process, setting a priority or privilege of the process, enabling or disabling features associated with the process, or otherwise affecting how the process executes in the vehicle.

In some examples, the configuration information may be in the form of a configuration file. As used here, a "file" can refer to any collection of information, such as a file of a file system or any other container of information. A configuration file can include configuration parameters that can be set to respective values, where the values of the configuration parameters can control or otherwise affect a process executed in the vehicle. For example, a configuration file can include one or more configuration objects, and each configuration object can include one or more keys that are assigned respective value(s). A key and the respective assigned value form a key-value pair. Each key represents a configuration parameter of the configuration file.

A configuration file may be created by a creator entity, such as the developer of a program to be deployed in a vehicle. A user entity, which may be a human user, a service provider that provides a service in association with a vehicle, a program, or a machine, may desire to modify the configuration file to affect how a process based on the program executes. Changing the original configuration file may be associated with various challenges. For example, the creator entity may later provide a new version of the configuration file, which can then be provided to a user entity. If the user entity had made changes to a prior version of the configuration file, the user entity would have to reapply the same changes to the new version of the configuration file. If there is a large quantity of changes previously made by the user entity, the changes of the new version of the configuration file can be tedious and time consuming, and may lead to errors if the changes are not consistently applied.

A change of a configuration parameter in a configuration file can include any or some combination of the following: replacing the configuration parameter (e.g., by assigning a different value to the configuration parameter), inserting a new configuration parameter into the configuration file, or deleting an existing configuration parameter from the configuration file.

In accordance with some implementations of the present disclosure, an initial configuration file can be changed using one or more update configuration files in a vehicle. An "initial configuration file" refers to a prior version of a configuration file, such as the original configuration file provided by a creator entity of a program, an updated version of the configuration file provided by the creator entity, or an updated version of the configuration file that was updated by a user entity. An "update configuration file" can specify one or more of the following: a modification of an existing configuration parameter in the initial configuration file, an insertion of a new configuration parameter that does not exist in the initial configuration file, or a deletion of an existing configuration parameter in the initial configuration file. The vehicle processes the initial configuration file and, subsequently, the one or more update configuration files are used to determine the final configuration parameters to apply for a process when executed in the vehicle. A modification of an existing configuration parameter can refer to a modification of one or more existing configuration parameters, an insertion of a new configuration parameter can refer to an insertion of one or more new configuration parameters, and a deletion of an existing configuration parameter can refer to a deletion of one or more existing configuration parameters.

Techniques or mechanisms according to some examples of the present disclosure can improve computer functionality or the relevant technology by reliably updating a configuration for processes in a vehicle using update configuration files. Updating the configuration for a process can fix errors that the process may be experiencing, or may improve the efficiency or speed at which the process executes in the vehicle.

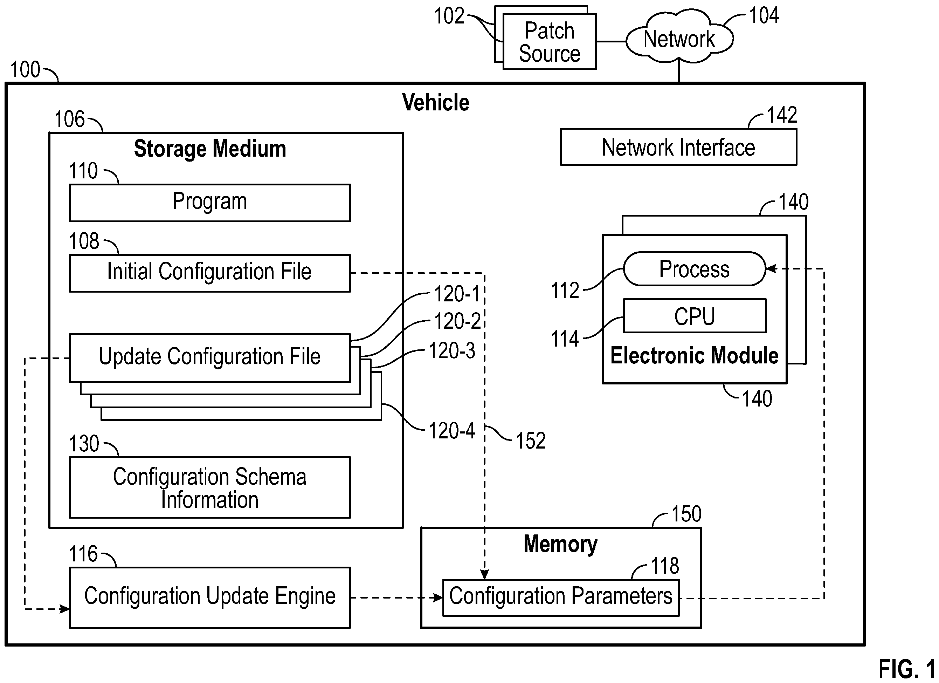

FIG. 1 is a block diagram of an example arrangement that includes a vehicle 100 that is coupled to one or more patch sources 102 over a network 104. The network 104 can be a wired network or a wireless network. A "patch source" can refer to any computing entity (a program or a machine) that can provide an update configuration file for use in updating configuration parameters used by one or more processes executed in the vehicle 100.

The vehicle 100 includes a storage medium 106, which can be implemented using one or more storage or memory devices, such as any or some combination of the following: a disk-based storage device, a solid-state drive, a random access memory such as a dynamic random access memory (DRAM) device, a static random access memory (SRAM) device, or a flash memory device.

An initial configuration file 108 is stored in the storage medium 106. The initial configuration file 108 is a configuration file provided by a creator entity, such as the developer of a program 110 to be deployed in the vehicle 100. The program 110 is stored in the storage medium 106. When the program 110 is launched and executed on a central processing unit (CPU) 114, a process 112 is run in the vehicle 100.

A CPU can include one or more processors that perform the processing resource of the vehicle 100. A processor can include a microprocessor, a core of a multi-core microprocessor, a microcontroller, a programmable integrated circuit, a programmable gate array, or another hardware processing circuit.

In examples according to FIG. 1, the CPU 114 is part of an electronic module 140 in the vehicle 100. The electronic module 140 may be an electronic control unit (ECU) of the vehicle 100, or any other assembly of electronic components. There may be multiple electronic modules 140 in the vehicle 100, where each electronic module 140 can include its respective CPU for executing a respective program. In such examples, there may be multiple programs and associated initial configuration files stored in the storage medium 106 for execution by respective CPUs of the electronic modules 140. The different electronic modules 140 may perform different tasks in the vehicle, such as any or some combination of the following: engine control, navigation control, transmission control, battery management, brake system control, air conditioning control, or any other vehicle tasks. Note that although the program 110 is depicted as being part of the storage medium 106 that is outside of an electronic module 140, in other examples, the portion of the storage medium 106 storing the program 110 may be inside an electronic module 140.

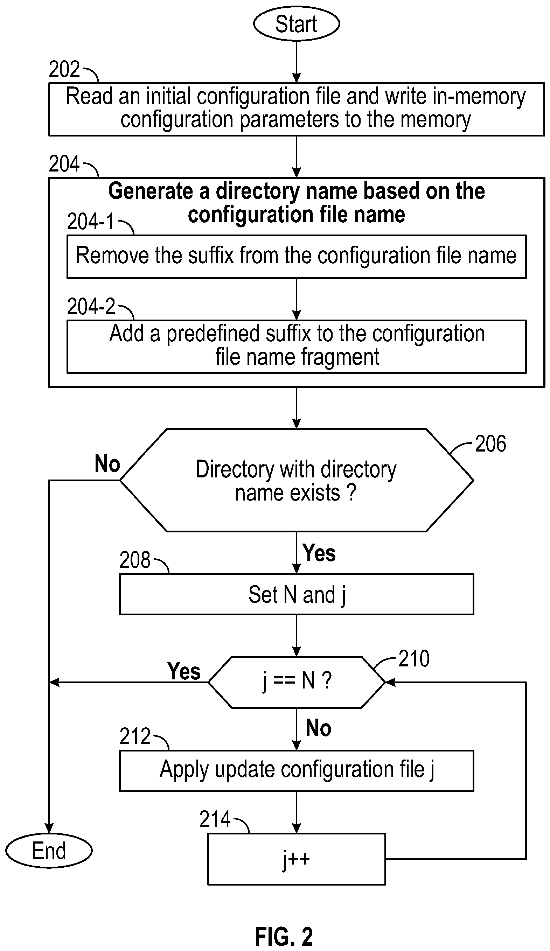

At a later time after the creator entity has delivered the initial configuration file 108 to another entity (e.g., a user entity) different from the creator entity of the program 110, the other entity may desire to update the initial configuration file 108 by using one or more update configuration files (e.g., 120-1, 120-2, 120-3, and 120-4 in FIG. 1). For example, the user entity can create the update configuration files 120-1 to 120-4 and deploy the update configuration files 120-1 to 120-4 into the vehicle 100 at the same time as the initial configuration file 108. The update of the initial configuration file 108 can be based on applying, by a configuration update engine 116, the update configuration files 120-1, 120-2, 120-3, and 120-4 in a specified order (e.g., according to the flow of FIG. 2). Although FIG. 1 depicts a specific quantity of update configuration files, in other examples, a different quantity of update configuration files may be applied in the vehicle 100.

The update configuration files 120-1 to 120-4 may be packaged with the initial configuration file 108 (and possibly also with the program 110) and deployed into the vehicle 100 by storing the package including the initial configuration file 108 and the update configuration files 120-1 to 120-4 into the storage medium 106. In other examples, the update configuration files 120-1 to 120-4 may be received from one or more external patch sources 102 at the vehicle 100. A "package" refers to any collection of files.

The vehicle 100 includes a network interface 142 that is coupled to a network 104 to communicate over the network 104. The network interface 142 may be a wireless interface in examples where the network 104 is a wireless network. Alternatively, the network interface 142 can communicate over a wired network.

The network interface 142 includes a transceiver to transmit and receive signals over the network 104. The network interface 142 may also include one or more protocol layers that manage communication of data according to respective communication protocol(s) over the 104.

The package including the initial configuration file 108 and the update configuration files 120-1 to 120-4 may be pre-installed in the vehicle 100, such as in firmware of the vehicle 100. Alternatively, the package including the initial configuration file 108 and the update configuration files 120-1 to 120-4 may be received at the vehicle over the network 104. The stored update configuration files 120-1 to 120-4 can be applied by the configuration update engine 116. The application of the update configuration files 120-1 to 120-4 to the initial configuration file 108 effectively performs a patch of the initial configuration file 108. In some examples of the present disclosure, the update configuration files 120-1 to 120-4 can be stored in a specified storage location (e.g., a directory) of the storage medium 106. The configuration update engine 116 can generate an identifier (e.g., a memory address, a name, etc.) of the specified storage location (e.g., a directory) based on a property of the initial configuration file 108, where the property can include a name of the initial configuration file 108, an identifier of the initial configuration file 108, a memory address of the initial configuration file 108, or any other property.

As used here, an "engine" can refer to a hardware processing circuit, which can include any or some combination of a microprocessor, a core of a multi-core microprocessor, a microcontroller, a programmable integrated circuit, a programmable gate array, or another hardware processing circuit. Alternatively, an "engine" can refer to a combination of a hardware processing circuit and machine-readable instructions (software and/or firmware) executable on the hardware processing circuit.

In some examples, the configuration update engine 116 is separate from the process 112 that uses configuration parameters. In other examples, the configuration update engine 116 is part of the process 112.

The update configuration files 120-1 to 120-4 are applied by the configuration update engine 116 in a specified order, such as based on characteristics of the update configuration files 120-1 to 120-4. In some examples, the characteristics of the update configuration files can include names of the update configuration files. The specified order can be an alphanumeric order of the update configuration files 120-1 to 120-4 based on the names of the update configuration files. For example, the configuration update engine 116 can apply the update configuration files 120-1 to 120-4 in ascending or descending order according to the names of the update configuration files 120-1 to 120-4. A "name" of an update configuration file can include a string of characters including alphabetic characters and numerals, for example.

In other examples, the specified order of application of the update configuration files 120-1 to 120-4 can be based on other characteristics of the update configuration files 120-1 to 120-4. Another characteristic may include a timestamp associated with an update configuration file, such as a creation timestamp specifying when the update configuration file was created or a modification timestamp specifying when the update configuration file was last modified.

In some examples, the update configuration file 120-1 may be first applied to change at least one configuration parameter for the initial configuration file 108, where the change can include modifying a value of the configuration parameter, inserting a new configuration parameter that did not exist in the initial configuration file 108, or deleting an existing configuration parameter that is present in the initial configuration file 108. Following the application of the update configuration file 120-1, the configuration update engine 116 applies the update configuration file 120-2, followed by applying the update configuration file 120-3, and then followed by applying the update configuration file 120-4.

The configuration update engine 116 first reads (at 152) the initial configuration file 108 into a memory 150 of the vehicle 100. The memory 150 holds a set of in-memory configuration parameters 118. Initially, the set of in-memory configuration parameters 118 is based on the configuration parameters in the initial configuration file 108. The configuration update engine 116 then applies the update configuration files 120-1 to 120-4 in the specified order to update the set of in-memory configuration parameters 118. With each application of a respective update configuration file by the configuration update engine 116, the set of in-memory configuration parameters 118 is changed (e.g., an existing configuration parameter is modified, a new configuration parameter is inserted, or an existing configuration parameter is deleted). After all update configuration files 120-1 to 120-4 are applied, the set of in-memory configuration parameters 118 includes the final configuration parameters that are to be used by the process 112 when executing in the vehicle 100. The final configuration parameters can control usage of a resource (e.g., a storage resource, a processing resource, or a communication resource in an electronic module 140 or outside the electronic module 140) of the vehicle 100 by the process 112, setting a priority or privilege of the process 112, enabling or disabling features associated with the process 112, or otherwise affecting how the process 112 executes in the vehicle 100.

The update configuration files 120-1 to 120-4 can be validated using configuration schema information, which defines a schema according to which an update configuration file is to conform to be valid. In some examples, the validation of the update configuration files 120-1 to 120-4 is performed (outside the vehicle 100 such as at a computer separate from the vehicle 100) prior to deployment of the update configuration files 120-1 to 120-4 into the vehicle 100. In other examples, the validation of the update configuration files 120-1 to 120-4 can be performed in the vehicle 100, such as by using configuration schema information 130 stored in the storage medium 106.

In some examples, prior to applying an update configuration file, the configuration update engine 116 checks whether a change specified by the update configuration file is valid. A change is invalid if the change is not possible, such as when the update configuration file specifies a deletion or a modification of a configuration parameter that does not exist in the initial configuration file, or when the update configuration file specifies an insertion of a configuration parameter after or before an entry that does not exist in the initial configuration file. The configuration update engine 116 applies the update configuration file to the initial configuration file in response to determining that the change specified by the update configuration file is valid. If the change specified by the update configuration file is invalid, then the configuration update engine 116 triggers an error handling process, such as to prevent application of the update configuration file and also possibly to prevent application of the initial configuration file. Other error handling processes are also possible.

FIG. 2 is a flow diagram of a flow of performing runtime processing of configuration files in the vehicle 100. The configuration files subject to the runtime processing include an initial configuration file and one or more update configuration files. "Runtime" processing refers to processing performed as part of the execution of the program 110.

Runtime processing is distinguished from offline processing, which may occur before or after the runtime processing. An example of offline processing includes validating the update configuration files 120-1 to 120-4 according to the configuration schema information 130. In some examples, the validation of the update configuration files 120-1 to 120-4 can be performed prior to deployment of the update configuration files 120-1 to 120-4 into the vehicle 100. This ensures that any update configuration file deployed into the vehicle 100 is valid.

The runtime processing of FIG. 2 includes the configuration update engine 116 reading (at 202) the initial configuration file 108 from the storage medium 106, and writing the configuration parameters in the initial configuration file 108 as the in-memory configuration parameters 118 (in-memory configuration) into the memory 150 (FIG. 1). In some examples, a configuration file (either an initial configuration file or an update configuration file) can have a JavaScript Object Notation (JSON) format. In other examples, a configuration file can have a different format.

The initial configuration file 108 has a configuration file name. For example, if the initial configuration file 108 is a JSON file, then its configuration file name will have a ".json" suffix. In other examples, the configuration file name of the initial configuration file 108 has a different suffix. The configuration update engine 116 generates (at 204) a directory name based on the configuration file name. For example, the configuration update engine 116 generates the directory name by removing (at 204-1) the suffix (e.g., ".json") from the configuration file name, which results in a configuration file name fragment with the suffix removed. For example, if the initial configuration file 108 is named XYZ.json, then removal of the ".json" suffix produces the configuration file name fragment "XYZ." The configuration update engine 116 then adds (at 204-2) a predefined suffix (e.g., ".c" which represents configuration) to the configuration file name fragment, which produces the directory name, e.g., XYZ.c. In other examples, a different predefined suffix can be added to the configuration file name fragment.

The directory name identifies a directory (folder) of a filesystem in which update configuration file(s) would be stored, if such update configuration file(s) exist(s). If no update configuration files exist, then a directory with this directory name would not be present. The directory containing the update configuration file(s) can be in a directory where the initial configuration file 108 is stored.

More generally, update configuration files can be stored in a specified storage location of a storage medium (e.g., 106 in FIG. 1). In such examples, the configuration update engine 116 can generate an identifier (e.g., a memory address, a name, etc.) of the specified storage location based on a property of the initial configuration file 108, where the property can include a name of the initial configuration file 108, an identifier of the initial configuration file 108, a memory address of the initial configuration file 108, or any other property.

The configuration update engine 116 determines (at 206) whether a directory with the generated directory name exists, to determine whether update configuration file(s) is (are) present that are to be applied to the initial configuration file 108. More generally, update configuration files can be stored in a specified storage location of a storage medium, in which case the configuration update engine 116 checks whether the specified storage location containing any update configuration files is present for the initial configuration file 108.

If no update configuration file is present for the initial configuration file 108 (e.g., the directory XYZ.c does not exist), the process ends, and the in-memory configuration parameters 118 in the memory 150 become the final configuration parameters (final in-memory configuration) to be used by the process 112.

However, if any update configuration files are present (e.g., the XYZ.c directory exists), the configuration update engine 116 applies the update configuration file(s). In the present example, it is assumed that N update configuration files are present, where N ≥ 0. The configuration update engine 116 sets (at 208) N to the number of update configuration files in the specified storage location, and sets j = 0. The configuration update engine 116 checks (at 210) whether j is equal to N, which indicates that all N update configuration files have been applied. If so, the process ends.

However, if j is not equal to N, the configuration update engine 116 applies (at 212) the changes in update configuration file j that is next in the specified order of the N update configuration files, which changes the set of in-memory configuration parameters 118 in the memory 150 (FIG. 1).

The configuration update engine 116 increments (at 214) j, and checks (at 210) if j is equal to N. If not, the configuration update engine 116 proceeds to task 212 to apply the next update configuration file in the specified order. If j is equal to N, then all update configuration files have been applied, and the set of in-memory configuration parameters 118 constitutes the final configuration parameters to be used by the process 112.

In some examples, an update configuration file can include any of the following change keys: replace, append, prepend, insert, and delete. In examples where the initial configuration file 108 is a JSON file, an update configuration file may be a JSON patch file that applies JSON patching according to Request for Comments (RFC) 6902, entitled "JavaScript Object Notation (JSON) Patch," dated April 2013. In other examples, other patching techniques can be applied.

The following depicts an example of a portion of an initial configuration file, where the portion relates to configuring a private memory for a process (e.g., 112 in FIG. 1).

```
 "resource-assignment": {
        "total-private-memory": {
           "size": 0,
           "privilege": 10
        }
 }
```

The initial configuration file includes a resource assignment array with two entries including configuration parameters relating to the private memory assigned. The first entry includes the "size" key assigned a value "0," and the second entry includes the "privilege" key assigned a value "10." An update configuration file in the form of a JSON patch file can be provided to replace the value of the "privilege" key or the "size" key with a different value. An update configuration file in the form of a JSON patch file may also be used to insert a new key-value pair, or to delete an existing key.

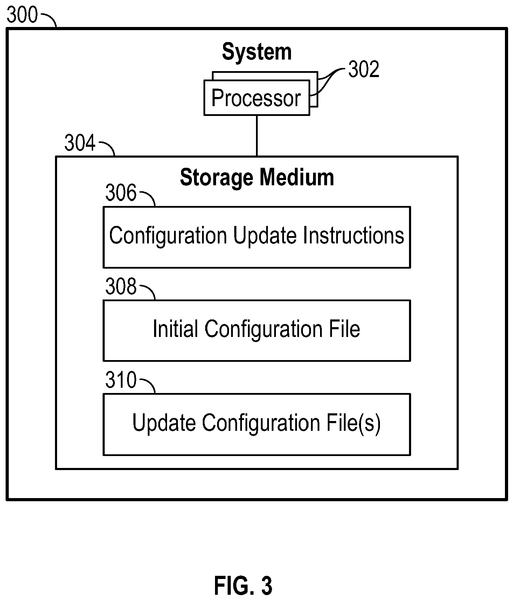

FIG. 3 is a block diagram of a system 300 according to some examples of the present disclosure. The system 300 may be a vehicle, such as the vehicle 100 of FIG. 1. Alternatively, the system 300 may be a computer system separate from any vehicle. In the latter example, the system 300 may be part of a cloud computing environment, part of a server system, part of a data center, or part of any other type of computing environment.

The system 300 includes one or more hardware processors 302. A hardware processor performing a task can refer to a single hardware processor performing the task or multiple hardware processors performing the task.

The system 300 includes a non-transitory machine-readable or computer-readable storage medium 304 that stores machine-readable instructions, including configuration update instructions 306, such as executable by the update configuration engine 116 of FIG. 1.

The storage medium 304 stores an initial configuration file 308 including one or more configuration parameters that affect an execution of a process in a vehicle. The storage medium 304 also stores one or more update configuration files 310, where an update configuration file includes entries specifying changes for the initial configuration file 308.

The configuration update instructions 306 are executable by the one or more processors 302 to determine whether any update configuration file is present by checking for a storage location (e.g., a directory) having an identifier (e.g., a directory name) based on a property (e.g., a name) of the initial configuration file 308. The configuration update instructions 306 apply the one or more update configuration files 310 if present to the initial configuration file 308, which produces final configuration parameters to be applied by the process in the vehicle. In cases where there are multiple update configuration files 310, the configuration update instructions 306 apply the multiple update configuration files 310 in a specified order to the initial configuration file 308 to determine the final configuration parameters to apply for the process when executed in the vehicle.

In examples where the system 300 is separate from the vehicle, the system 300 can transmit the final configuration parameters (e.g., in an output configuration file) to the vehicle, such as over a wireless or wired network or communication link.

The changes specified by the one or more update configuration files 310 include any or some combination of the following: an insertion of a new configuration parameter with respect to the initial configuration file 308 (the new configuration parameter is not present in the initial configuration file 308), or a modification of a value of an existing configuration parameter in the initial configuration file 308. The insertion of the new configuration parameter includes any of the following: appending the new configuration parameter after an entry in the initial configuration file 308, or prepending the new configuration parameter before an entry of the initial configuration file 308, or inserting the new configuration parameter between entries of the initial configuration file 308.

Note that the final configuration parameters (final in-memory configuration) are produced based on the changes made to configuration parameters in the initial configuration file 308, without changing the initial configuration file 308.

In some examples, an existing configuration parameter in the initial configuration file 308 includes a key-value pair including a key representing the existing configuration parameter and a first value assigned to the key, and the changes for the initial configuration file 308 include a modification of a value assigned to key.

In some examples, a first update configuration file includes an array of entries for changing the initial configuration file 308, where the array of entries includes two or more of an insertion entry specifying insertion of a configuration parameter, a modification entry specifying a modification of a configuration parameter in the initial configuration file 308, and a deletion entry specifying a deletion of a configuration parameter in the initial configuration file 308.

The storage medium 304 can include any or some combination of the following: a semiconductor memory device such as a dynamic or static random access memory (a DRAM or SRAM), an erasable and programmable read-only memory (EPROM), an electrically erasable and programmable read-only memory (EEPROM) and flash memory or other type of non-volatile memory device; a magnetic disk such as a fixed, floppy and removable disk; another magnetic medium including tape; an optical medium such as a compact disk (CD) or a digital video disk (DVD); or another type of storage device. Note that the instructions discussed above can be provided on one computer-readable or machine-readable storage medium, or alternatively, can be provided on multiple computer-readable or machine-readable storage media distributed in a large system having possibly plural nodes. Such computer-readable or machine-readable storage medium or media is (are) considered to be part of an article (or article of manufacture). An article or article of manufacture can refer to any manufactured single component or multiple components. The storage medium or media can be located either in the machine running the machine-readable instructions, or located at a remote site from which machine-readable instructions can be downloaded over a network for execution.

In the present disclosure, use of the term "a," "an," or "the" is intended to include the plural forms as well, unless the context clearly indicates otherwise. Also, the term "includes," "including," "comprises," "comprising," "have," or "having" when used in this disclosure specifies the presence of the stated elements, but do not preclude the presence or addition of other elements.

In the foregoing description, numerous details are set forth to provide an understanding of the subject disclosed herein. However, implementations may be practiced without some of these details. Other implementations may include modifications and variations from the details discussed above. It is intended that the appended claims cover such modifications and variations.

## Claims

1. A method comprising:
reading, in a vehicle, a first configuration file comprising a first configuration parameter that affects an execution of a process in the vehicle;
determining, by the vehicle, whether any update configuration file is present by checking for a storage location having an identifier based on a property of the first configuration file, the update configuration file comprising an entry specifying a change for the first configuration file; and
based on determining that the update configuration file is present in the storage location, applying, by the vehicle, the update configuration file to the first configuration file to determine configuration parameters to apply for the process when executed in the vehicle.

2. The method of claim 1, wherein the storage location is in a memory and the storage location comprises the first configuration file and the update configuration file.

3. The method of claim 1 or 2, wherein the change specified by the update configuration file comprises an insertion of a second configuration parameter with respect to the first configuration file.

4. The method of any of claims 1 to 3, wherein the second configuration parameter is not present in the first configuration file; and optionally
wherein the insertion of the second configuration parameter comprises:
appending the second configuration parameter after an entry in the first configuration file; or
prepending the second configuration parameter before an entry of the first configuration file; or
inserting the second configuration parameter between entries of the first configuration file.

5. The method of any one of claims 1 to 4, wherein the change specified by the update configuration file comprises a modification of a value of the first configuration parameter in the first configuration file.

6. The method of any one of claims 1 to 5, wherein the first configuration file and the update configuration file are received at the vehicle in a package.

7. The method of any one of claims 1 to 6, wherein checking for the storage location comprises checking for a directory having a name based on a name of the first configuration file, and wherein the update configuration file if present is in the directory; and optionally
deriving, by the vehicle, the name of the directory by replacing a suffix in the name of the first configuration file with a different suffix.

8. The method of any one of claims 1 to 7, wherein the first configuration parameter in the first configuration file comprises a key-value pair comprising a key representing the first configuration parameter and a first value assigned to the key, and the change for the first configuration file comprises a modification of a value assigned to key.

9. The method of any of claims 1 to 8, wherein the storage location comprises a plurality of update configuration files, the method comprising:
applying the plurality of update configuration files in a specified order according to characteristics of the plurality of update configuration files to the first configuration file to determine configuration parameters to apply for the process when executed in the vehicle.

10. The method of any of claims 1 to 9, wherein the characteristics comprise names of the plurality of update configuration files; and optionally
wherein the specified order is an alphabetical order according to the names of the plurality of update configuration files.

11. The method of any one of claims 1 to 10, further comprising:
validating the update configuration file according to schema information prior to the applying of the update configuration file; and/or
wherein the first configuration file is read into a memory as a set of in-memory configuration parameters, and wherein the applying of the update configuration file comprises changing the set of in-memory configuration parameters in the memory.

12. A system comprising:
one or more processors; and
a non-transitory storage medium storing instructions executable by the one or more processors to:
read a first configuration file comprising a first configuration parameter that affects an execution of a process in a vehicle;
determine whether any update configuration file is present by checking for a storage location having an identifier based on a property of the first configuration file, the update configuration file comprising an entry specifying a change for the first configuration file;
determine whether the change is valid; and
based on determining that the change is valid, apply the update configuration file to the first configuration file to determine configuration parameters to apply for the process when executed in the vehicle.

13. The system of claim 12, wherein the instructions are executable by the one or more processors to:
based on determining that the change is invalid, initiate error handling to prevent application of the update configuration file and prevent application of the first configuration file.

14. The system of any of claims 12 and 13, wherein the storage location comprises a directory, and the instructions are executable by the one or more processors to:
derive a directory name of the directory based on a name of the first configuration file; and
determine whether any update configuration file is present by checking for presence of the directory having the directory name.

15. A non-transitory machine-readable storage medium comprising instructions that upon execution cause a system to:
read a first configuration file comprising a first configuration parameter that affects an execution of a process in a vehicle;
determine whether any update configuration file is present by checking for a storage location having an identifier based on a property of the first configuration file, the update configuration file comprising an entry specifying a change for the first configuration file; and
apply the update configuration file to the first configuration file to determine configuration parameters to apply for the process when executed in the vehicle; and optionally
wherein the storage location comprises a directory, and the instructions upon execution cause the system to:
derive a directory name of the directory by replacing a suffix in a name of the first configuration file with a different suffix; and
determine whether any update configuration file is present by checking for the directory having the directory name.
